Europäisches Patentamt

(19) European Patent Office

Office européen des brevets

(11) Publication number: **0 003 653**

A1

(12) # EUROPEAN PATENT APPLICATION

(21) Application number: 79300149.6

(22) Date of filing: 30.01.79

(51) Int. Cl.²: **G 11 B 23/04,** G 11 B 23/08

(30) Priority: 02.02.78 GB 414878

(43) Date of publication of application: 22.08.79
Bulletin 79/17

(84) Designated Contracting States: CH DE FR IT

(71) Applicant: Cotek Papers Limited, Draycott, Moreton-in-Marsh Gloucestershire GL56 9JU (GB)

(72) Inventor: Candler, Dennis John, Rivendell Campden Road Eberington, Chipping Campden Gloucestershire (GB)

(74) Representative: James, Michael John Gwynne et al, Wynne-Jones, Lainé & James 22, Rodney Road, Cheltenham Gloucestershire GL50 1JJ (GB)

(54) Improvements relating to foils for tape cassettes.

(57) A foil (5) is provided for incorporation into a tape cassette so as to lie over the spools fitted in the cassette. The foil (5) incorporates two openings (6) for the receipt of two hubs in the cassette and a window aperture (7) enabling the amount of tape on a spool to be viewed through a corresponding opening in the cassette. A foil is formed from a paper sheet (11) coated on one side with a friction reducing material and the window aperture (7) is covered by a strip of transparent material (12) attached to the other side of the paper sheet (11). The transparent material (12) may be provided as a lamination of two sheets one of which carries a pressure sensitive adhesive leaving an edge portion (13) for attachment to the paper sheet (11), the non-coated laminated sheet projecting at the other side (14). The provision of a separate transparent sheet (12) means that the friction reducing surface of the foil (5) is not interfered with whilst the tape cassette itself can have a completely open window portion.

"Improvements Relating to Foils for Tape Cassettes"

This invention relates to foils for incorporation into tape cassettes. Such foils (also termed slip sheets or liners) are positioned within the tape cassette above and below the spools and their purpose is to reduce the possibility of the tape being wound from one spool to another from jamming or binding (particularly when the tape is being wound at high speed).

The foil will of course be provided with openings to receive the two spool hubs which are formed integrally with the upper and lower portions of the cassette case and also incorporates a window aperture which corresponds in position to a window opening in the case itself. This window allows the user to see the extent to which each spool has been wound and a scale is usually provided adjacent to a window.

Previously the cassette case was constructed with a clear plastics portion fitted into the window opening in the case but the insertion of this portion adds a further step to the production process and the ultrasonic welding method usually employed for fixing the portion in place gives rise to a percentage of distortions of the window which means that that particular case must be rejected.

The foil is conventionally constructed either from a plastics material or from paper and obviously where

r

plastics material is employed a transparent portion can be incorporated which would be aligned with the window opening in the case of the cassette so that the provision of a plastics window in the window opening is no longer required. However foils of plastics material have inferior operating characteristics as compared with a paper foil coated with friction reducing material so that jamming may well occur at high-winding speeds especially where long running tapes are employed which must necessarily be formed from thinner tape material. Again limitations on the maximum high-winding speed of the tape affect the production time for the construction of the cassette.

According to the present invention there is provided a foil for incorporation into a tape cassette to lie over spools fitted in the cassette, the foil being formed from a paper sheet coated on one side with a friction reducing material and having two openings therein for receipt of the two spool hubs and a window aperture between the two openings, the window aperture being covered by a strip of transparent material attached to the other side of the paper sheet.

Such a foil combines the advantages of coated paper foils (namely the possibility of high-winding speeds and easier handling characteristics in automatic machines for constructing the tape cassette) with improvements in production time since the window opening in the cassette case does not have to be provided with the previous clear plastics window but can be left completely open.

In one preferred embodiment the strip is secured to the paper sheet by a self adhesive carried by the strip. Thus the strip may carry pressure sensitive adhesive on the areas where it is attached to the paper sheet and in particular the strip can comprise a lamination of two layers of transparent material secured together by the self adhesive to leave regions of self adhesive exposed on one of the layers where the strip is attached to the paper sheet. The other layer of the lamination need not carry any self adhesive and in this case edge portions of the first layer carrying the self adhesive may be overlapped by the other layer over those regions of the strip which are not required to be secured to the paper sheet.

Alternatively the strip may be secured to the paper sheet by a wet adhesive or by heat sealing.

If there is a possibility that preferential swelling of the paper sheet with respect to the strip can occur then ideally the strip will be secured to the paper sheet along one edge only. In any case, however, the strip may be secured to the paper sheet at discrete points. Where conditions permit, the strip can of course be secured to the paper sheet over the whole of the area of contact therebetween.

The amount of strip material used may be limited

0003653

by providing that the strip extends across a central portion only of the paper sheet in a direction aligned with the three openings in the paper sheet or at right angles thereto. Where the strip is aligned with the three openings this ensures that the thickness of foil material across the whole diameter of each spool is identical so that the possibility of tilting of the spool is limited. However provision of the strip in the other direction requires less strip material to be used.

Preferably the paper sheet is coated on the one side with a silicone or other anti-friction material. The foil is advantageously so formed that V-shaped notches are cut in the centre of the edges of the foil which lie parallel with the line of alignment of the three openings. These notches will provide spaces for alignment pins normally provided in the cassette case. However one type of foil is ideally formed with a narrow slot which extends inwardly from the apex of each V-shaped notch for receipt of an alignment pin in the cassette. These slots will grip the alignment pins so that the foil positioned on the under surface of the upper portion of the cassette case during assembly will not fall out.

If desired the foil can be of corrugated form which will reduce the amount of foil material in contact with each spool and the tape wound thereon and this may prove to be of advantage in certain cases.

The invention also extends to a roll of foils of the type according to the invention as hereinbefore defined, each foil being attached to an adjacent one along an edge thereof which lies parallel to the line of alignment of the three openings or a line at right angles to the line of alignment.  Such a roll of foils wound onto a spool may be supplied to a cassette manufacturer for use in an automatic assembly machine which will cut off each individual foil for use in a cassette.

The invention may be performed in various ways and preferred embodiments thereof will now be described, by way of example, with reference to the accompanying drawings, in which:-

Figure 1 is a plan view of a tape cassette case;

Figure 2 is an underneath plan view of one half portion of the case shown in Figure 1;

Figure 3 is a view similar to that of Figure 2 but showing a foil fitted inside the case portion;

Figure 4 is a plan view of a foil of this invention;

Figure 5 is a modified form of foil of this invention;

Figure 6 illustrates a strip of foils of the type shown in Figure 4;  and

Figure 7 illustrates a foil of an alternative shape for use in the cassette illustrated in Figures 1 to 3.

0003653

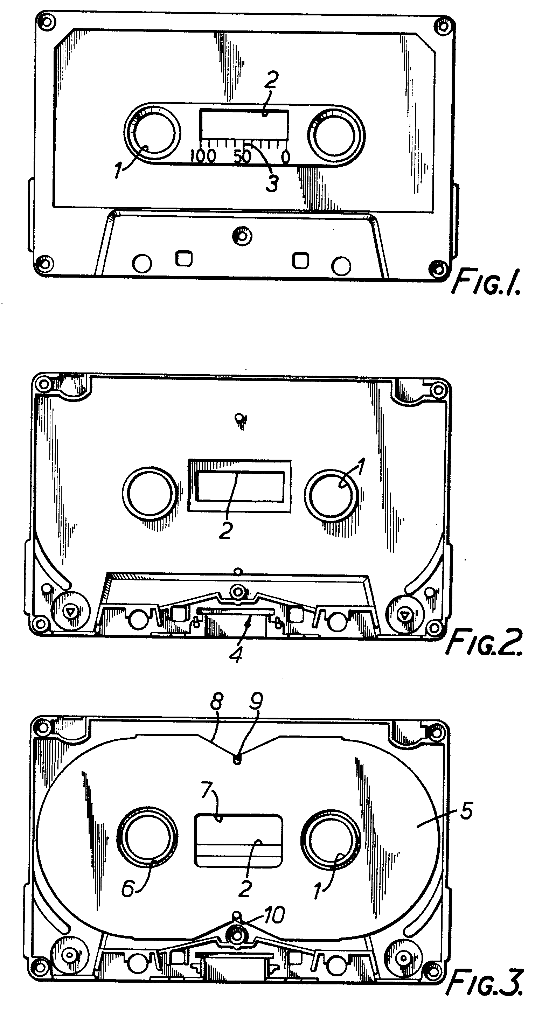

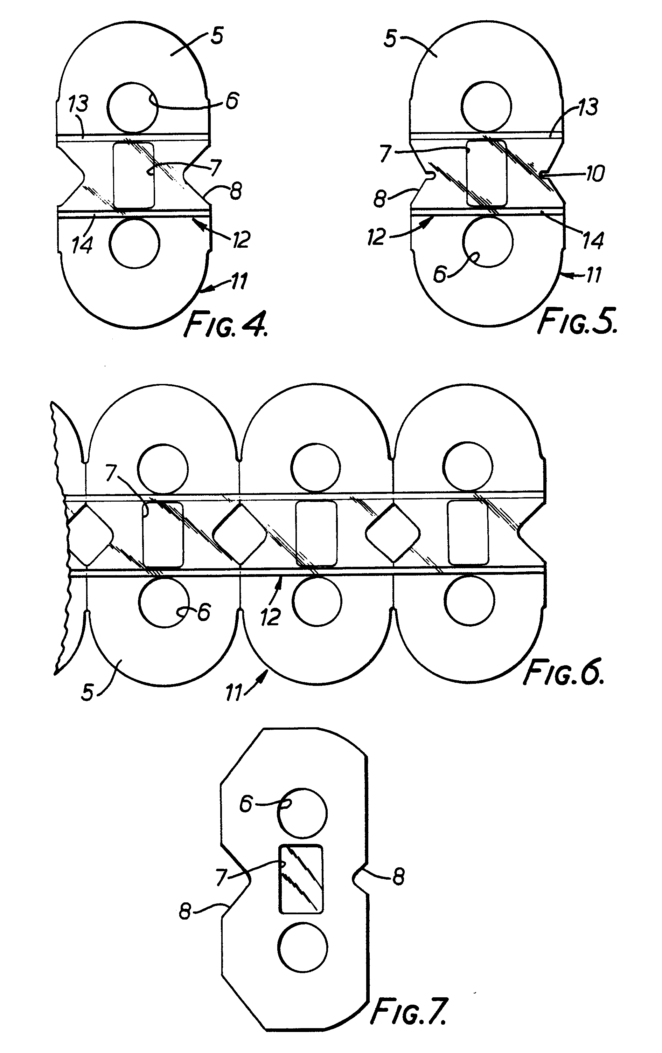

The cassette case shown in Figures 1 and 2 comprises two substantially identical half portions which are fitted together to enclose a pair of spools together with the tape carried thereby. The spools are mounted on hubs 1 projecting inwardly of the case and a window opening 2 is formed in each half portion to allow the user to see the extent to which each spool has been wound. A scale 3 is provided to indicate the degree of winding of each spool. During assembly of the cassette a metal shield and a pressure pad are inserted in the region 4 and the spools are located over the hubs 1. The inside surfaces of the case which would contact the spools are masked by foils such as the foil 5 shown in Figure 3. The foils extend substantially over the whole of the free space within the cassette case but are provided with openings 6 for receipt of the two hubs 1 and a window aperture 7 which will be aligned with the window opening 2. V-shaped notches 8 are cut into the two sides of the foil which will either pass around alignment pins 9 forming part of the case (as shown in Figure 4) or will be provided with narrow slots 10 which will grip the alignment pins 9 (as shown in Figure 5). The type of foil as illustrated in Figure 4 will be used in the lower half portion of the case whilst the type of foil illustrated in Figure 5 will be used in the half portion of the case which will be in the upper position, during assembly, so that the foil will not tend to drop out in the course of the assembly procedure.

The foils as illustrated in Figures 4 and 5 comprise a paper sheet 11 provided with a silicone coating on the under surface (which is the surface that faces and contacts the tape and is the upper surface in the illustration in Figure 3) together with a strip of emulsion-polymerised glass-clear vinyl material 12 attached to the sheet 11. The strip 12 is formed as a lamination of two sheets of material, one of which carries a pressure sensitive adhesive, the laminated sheets overlapped so that an edge portion of the adhesive covered material is exposed at 13 so that it will attach to the paper sheet 11. The non-coated laminated sheet projects at the other side 14 so as to avoid bleeding of adhesive which might otherwise occur.

Figure 6 illustrates how a series of foils 5 of the type shown in Figure 4 may be formed in a continuous strip. During the assembly process the window aperture 7 will be cut from the paper sheet 11 and subsequently the transparent strip 12 will be attached to the paper sheet. Then a further cutting process forms the shape of each foil 5 together with the openings 6 and the V-shaped notches in the paper sheet 11 and the strip 12. It is however possible to construct the punching apparatus to cut the window aperture 7 whilst the strip 12 is in place so that all unwanted foil portions may be removed in a single operation.

The strip shown in Figure 6 can be rolled onto a spindle and then supplied in the roll for subsequent use in constructing the assembled cassette. During the construction procedure each foil 5 will be cut off by a cutting machine as required and of course a separate roll will be supplied for the type of foil illustrated in Figure 5.

Figure 7 merely illustrates another shape which may be used for the foil and it will be noted that the two V-shaped notches differ from one another.

CLAIMS

1. A foil for incorporation into a tape cassette to lie over spools fitted in the cassette, the foil being formed from a paper sheet and having two openings therein for receipt of the two spool hubs and a window aperture between the two openings, characterised in that the paper sheet (11) is coated on one side with a friction reducing material and the window aperture (7) is covered by a strip (12) of transparent material attached to the other side of the paper sheet (11).

2. A foil according to claim 1, further characterised in that the strip (12) is secured to the paper sheet (11) by a self adhesive carried by the strip (12).

3. A foil according to claim 2, further characterised in that the strip (12) carries a pressure sensitive adhesive on the areas (13) where it is attached to the paper sheet (11).

4. A foil according to claim 2 or claim 3, further characterised in that the strip (12) comprises a lamination of two layers of transparent material secured together by the self adhesive to leave regions (13) of self adhesive exposed on one of the layers where the strip is attached to the paper sheet (11).

5. A foil according to claim 4, further characterised in that the other of the layers carries no self adhesive.

**0003653**

6. A foil according to claim 1, further characterised in that said strip (12) is secured to the paper sheet (11) by a wet adhesive or by heat sealing.

7. A foil according to any one of claims 1 to 6, further characterised in that the strip (12) is secured to the paper sheet (11) along one edge (13) only.

8. A foil according to any one of claims 1 to 7, further characterised in that the strip (12) is secured to the paper sheet (11) at discrete points.

9. A foil according to any one of claims 1 to 6, further characterised in that the strip (12) is secured to the paper sheet (11) over the whole of the area of contact therebetween.

10. A foil according to any one of claims 1 to 9, further characterised in that the strip (12) extends across a central portion only of the paper sheet (11) in a direction aligned with the three openings (6,7) in the paper sheet (11) or at right angles thereto.

11. A foil according to any one of claims 1 to 10, further characterised in that the paper sheet (11) is coated on tne one side with a silicone or other anti-friction material.

12. A foil according to any one of claims 1 to 11, further characterised in that it is of corrugated form.

13. A roll of foils of the type as claimed in any one of claims 1 to 12, characterised in that each foil (5) is attached to an adjacent one along an edge thereof which lies parallel to the line of alignment of the three openings (6,7) or a line at right angles to the line of alignment.

FIG.1.

FIG.2.

FIG.3.

FIG. 4.

FIG. 5.

FIG. 6.

FIG. 7.

00**0**3653

European Patent
Office

**EUROPEAN SEARCH REPORT**

Application number

EP 79 300 149.6

| | **DOCUMENTS CONSIDERED TO BE RELEVANT** | | | CLASSIFICATION OF THE APPLICATION (Int. Cl.²) |
|---|---|---|---|---|
| Category | Citation of document with indication, where appropriate, of relevant passages | | Relevant to claim | |
| | DE - U - 7 708 727 (PAMPUS)<br>* claims 1 and 3; fig. 1 to 3 *<br><br>-- | | 1, 13 | G 11 B  23/04<br>G 11 B  23/08 |
| | DE - U - 7 329 489 (PAMPUS)<br>* claims 1 to 2 *<br><br>-- | | 1 | |
| | FR - A - 1 577 537 (HITACHI MAXELL)<br>* claim 1 *<br><br>-- | | 1 | **TECHNICAL FIELDS SEARCHED (Int.Cl.²)** |
| | FR - A - 2 267 015 (HOECHST)<br>* claim 2 *<br><br>-- | | 11 | G 11 B  23/00 |
| | US - A - 3 675 875 (DU PONT DE NEMOURS)<br>* claim 1 *<br><br>-- | | 12 | |
| | DE - U - 7 523 200 (NTN TOYO BEARING)<br>* fig. 8 and 9 *<br><br>---- | | 13 | **CATEGORY OF CITED DOCUMENTS** |

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | The present search report has been drawn up for all claims | | |
|---|---|---|---|
| Place of search | Date of completion of the search | Examiner | |
| Berlin | 19-04-1979 | LEITHÄUSER | |

EPO Form 1503.1  06.78